# EUROPEAN PATENT APPLICATION

(11) **EP 0 917 141 A2**
(43) Date of publication of application: **19.05.1999**
(21) Application number: 98650074.2
(22) Date of filing: 12.11.1998
(51) Int. Cl.: G11B 17/04

(54) **Disk drive for rotating removable media-type disks**

(30) Priority: 14.11.1997 US 970469
(71) Applicant: Caleb Technology Corporation, Boulder, Colorado 80301 (US)
(72) Inventor: Parsons, James H., Berthoud, Colorado 80513 (US); Wadsworth, Edwin J., Longmont, Colorado 80503 (US); Banks, Christopher F., Boulder, Colorado 80503 (US); Lee, Lane W., Lafayette, Colorado 80026 (US)
(74) Representative: McKeown, Yvonne Mary

(57) **Abstract**

A disk drive for rotating a removable media-type disk is provided. The disk drive has a disk receiving compartment, a front face including a slot through which the disk is intended to pass as it moves into and out of the compartment, a biasing mechanism for biasing the disk in a direction away from the compartment through the slot, and a retention mechanism for overcoming the bias of the biasing mechanism and releasably retaining the disk within the compartment of the disk drive. The improvement comprises an ejection arrangement including an actuatable release mechanism cooperating with the retention mechanism for releasing the retention mechanism so as to allow the biasing mechanism to eject the disk from the disk drive when the release mechanism is actuated. An actuating mechanism is located on the front face inwardly from both ends of the slot for actuating the release mechanism.

## Description

### BACKGROUND OF THE INVENTION

### 1. Field of the Invention

This invention relates generally to a disk drive for rotating removable media-type disks and, more particularly, it relates to a high density disk drive for rotating removable media-type, high density disks.

### 2. Description of the Prior Art

In the past, soft or removable media-type disks for rotational use in a standard floppy disk drive have been known for quick and easy storage of a user's data. Most of the removable media-type disks, however, are "low density", e.g., the removable media-type disk has a density of less than two (2) to three (3) MB.

Standard disk drives (i.e., floppy disk drives) for rotating removable media-type disks are also well known in the art. A standard disk drive is a low density disk drive having its ejection button positioned generally adjacent one side of the standard disk drive. The ejection button is depressable to overcome the bias of centrally located springs to release a catch mechanism within the standard disk drive. Since the ejection button is adjacent one side of the standard disk drive, the pressure on the springs is not even and the disk, during ejection, tends to bind up within the standard disk drive.

The standard disk drive further has a disk receiving slot along the front of the disk drive with a finger relief portion positioned generally centrally along the disk receiving slot on the front of the standard disk drive. When the disk is inserted, the pressure on the disk is centrally located due to the user applying force on the disk at the location of the finger relief portion. Since the catch mechanism of the standard disk drive is adjacent one of the sides of the standard disk drive, applying a central force on the disk tends to cause the disk to cant and smooth loading of the disk into the standard disk drive is difficult.

Furthermore, the standard disk drives are only capable of reading information from and writing data to low density disks. If a high density disk is inserted into the standard disk drive, any attempts to write data to the high density disk could destroy the high density embedded servo information of the high density disk thereby destroying any high density information stored on the high density disk.

Accordingly, there exists a need for a high density disk which is inhibited from being inserted in a standard disk drive. Additionally, there exists a need for a disk drive which allows the disk to be ejected smoothly by applying equal pressure to the centrally located springs to release a catch mechanism within the disk drive. Furthermore, there exists a need for a disk drive which allows the disk to be inserted evenly by applying a direct force on the disk to the catch mechanism within the disk drive.

### SUMMARY OF THE INVENTION

The present invention is an improvement in a disk drive for rotating a removable media-type disk. The disk drive has a disk receiving compartment, a front face including a slot through which the disk is intended to pass as it moves into and out of the compartment, a biasing mechanism for biasing the disk in a direction away from the compartment through the slot, and a retention mechanism for overcoming the bias of the biasing mechanism and releasably retaining the disk within the compartment of the disk drive.

The improvement of the present invention comprises an ejection arrangement including actuatable release means cooperating with the retention mechanism for releasing the retention mechanism so as to allow the biasing mechanism to eject the disk from the disk drive when the release means is actuated. Actuating means are located on the front face inwardly from both ends of the slot for actuating the release means.

In an embodiment of the improvement of the present invention, the actuating means includes an activatable button depressable in a direction generally toward the disk drive compartment.

In another embodiment of the improvement of the present invention, the slot has a finger relief portion with the width of the finger relief portion being greater than the width of the slot. Preferably, the finger relief portion is off-centered on the front face of the disk drive.

The present invention is further a disk drive for rotating a removable media-type disk. The disk drive has a disk receiving compartment, a front face including a slot through which the disk is intended to pass as it moves into and out of the compartment, a biasing mechanism for biasing the disk in a direction away from the compartment through the slot, and a retention mechanism for overcoming the bias of the biasing mechanism and releasably retaining the disk within the compartment of the disk drive. The disk drive of the present invention comprises an off-centered finger relief portion surrounding a portion of the slot, the width of the finger relief portion being greater than the width of the slot.

In an embodiment of the disk drive of the present invention, the disk drive further comprises an ejection arrangement including actuatable release means cooperating with the retention mechanism for releasing the retention mechanism so as to allow the biasing mechanism to eject the disk from the disk drive when the release means is actuated. Preferably, the disk drive still further comprises actuating means located on the front face inwardly from both ends of the slot for actuating the release means.

The present invention is still further an improvement in a removable media-type disk for rotational use in a floppy disk drive. The disk has a rotatable recording media and a cartridge surrounding the recording media. The cartridge has a first top surface and a second bottom surface. The improvement comprises means on the cartridge for inhibiting insertion of the disk into a standard, low density disk drive.

In an embodiment of the improvement of the present invention, the means includes a raised portion on either the first top surface or the second bottom surface of the cartridge. Preferably, the means includes a first raised portion on the first top surface of the cartridge and a second raised portion on the second bottom surface of the cartridge.

In another embodiment of the improvement of the present invention, the first top surface and the second bottom surface of the cartridge each has a front edge, a back edge substantially opposite the front edge, a first surface edge between the front edge and the back edge, and a second surface edge substantially opposite the first surface edge and between the front edge and the back edge with the means including a raised portion on either the first top surface or the second bottom surface of the cartridge nearingly adjacent the front surface edge and either the first surface edge or the second surface edge. Preferably, the means includes a raised portion on either the first top surface and the second bottom surface of the cartridge nearingly adjacent the front surface edge and either the first surface edge or the second surface edge.

The present invention further includes a method of preventing a high density disk from being inadvertently inserted into a standard disk drive. The standard disk drive includes an internal compartment and a slot having a widened finger relief portion centrally located along the length of the slot whereby to accommodate the insertion and ejection of a low density disk into and out of the compartment through the slot with the finger relief portion being located at substantial central location along the length of the slot. The method comprises the steps of providing a high density disk assembly including a rotatable recording media and a cartridge surrounding the recording media and configuring the cartridge to include at least one projection on the cartridge. The projection along with the cartridge have a dimension greater than the width of the non-finger relief portion of the slot whereby upon attempting to insert the high density cartridge into the standard disk drive, the projection will prevent the high density disk assembly from being inserted.

In an embodiment of the method of the present invention, the cartridge has a first top surface and a second bottom surface. Preferably, the projection includes a raised portion on either the first top surface or the second bottom surface of the cartridge.

In another embodiment of the method of the present invention, the cartridge has a first top surface and a second bottom surface and the method further comprises the projection including a first raised portion and a second raised portion and positioning the first raised portion on the first top surface of the cartridge and the second raised portion on the second bottom surface of the cartridge.

The present invention further includes a method of operating high and low density disk drives with high and low density disks. The method comprises the steps of providing a standard disk drive, providing a high density disk drive, providing a standard disk, providing a high density disk, configuring the high density disk drive such that the high density disk drive is able to receive and act on both the high density disk and the standard disk, and configuring the high density disk such that the high density disk can not be physically inserted into the standard disk drive

In an embodiment of the method of the present invention the high density disk drive has a slot and a finger relief portion along the slot and further wherein the high density disk has a projection aligned with the finger relief portion with the width of the finger relief portion being greater than the width of the slot. Preferably, the finger relief portion is off-centered relative to the slot.

### BRIEF DESCRIPTION OF THE DRAWINGS

FIG. 1 is a perspective view illustrating the disk drive for rotating a removable media-type disk constructed in accordance with the present invention;
FIG. 2 is a perspective view similar to FIG. 1 illustrating the disk drive for rotating a removable media-type disk constructed in accordance with the present invention;
FIG. 3 is a perspective view illustrating the disk drive for rotating a removable media-type disk constructed in accordance with the present invention with the face plate positioned on the front face of the disk drive;
FIG. 4 is a top view illustrating the holding assembly of the disk drive for rotating a removable media-type disk constructed in accordance with the present invention;
FIG. 5 is a end view illustrating the holding assembly of the disk drive for rotating a removable media-type disk constructed in accordance with the present invention;
FIG. 6 is a top view illustrating the slider assembly of the disk drive for rotating a removable media-type disk constructed in accordance with the present invention;
FIG. 7 is a side view illustrating the slider assembly of the disk drive for rotating a removable media-type disk constructed in accordance with the present invention;
FIG. 8 is an end view illustrating the slider assembly of the disk drive for rotating a removable media-type disk constructed in accordance with the present invention;
FIG. 9 is a perspective view illustrating the disk constructed in accordance with the present invention; and
FIG. 10 is a side view similar to FIG. 9 illustrating the disk constructed in accordance with the present invention.

### DETAILED DESCRIPTION OF THE PREFERRED EMBODIMENTS

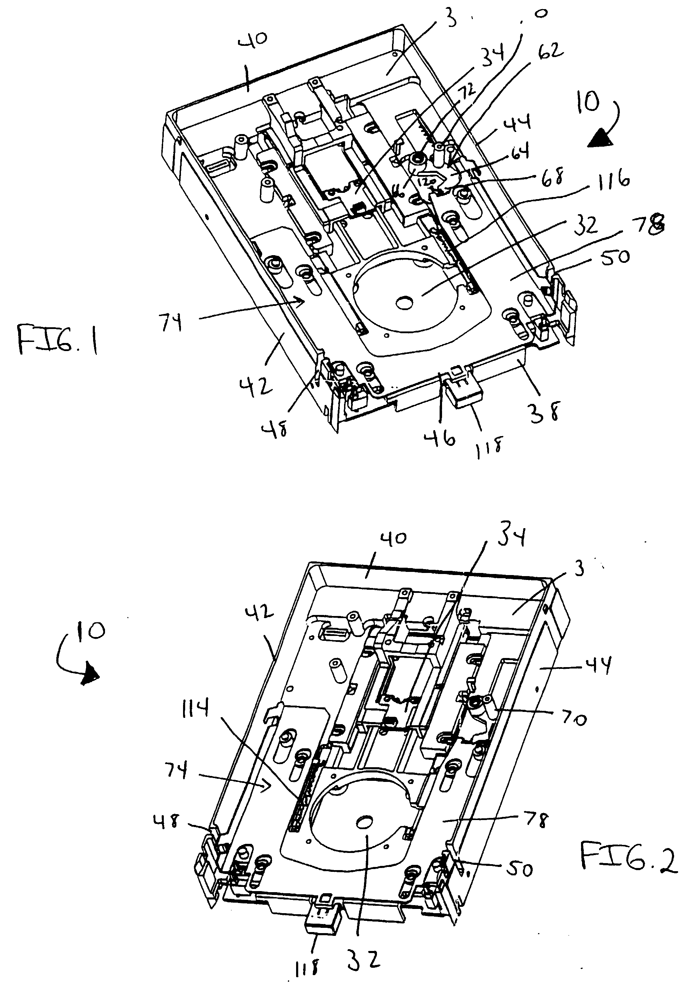

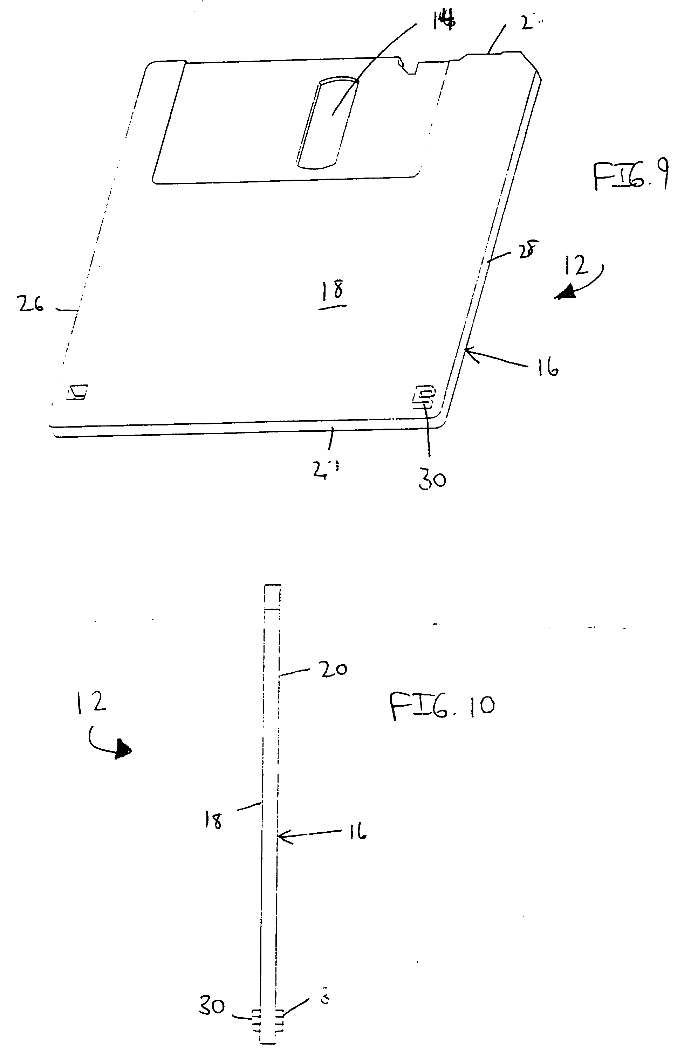

As illustrated in FIG. 1, the present invention is a disk drive, indicated generally at 10, for rotating a removable media-type disk 12 (see FIGS. 9 and 10). As illustrated in FIGS. 9 and 10, the disk 12 has a rotatable recording media 14 and a cartridge 16 surrounding the recording media 14. The cartridge 16 has a first top surface 18, a second bottom surface 20 opposite the first top surface 18, a front edge 22, a back edge 24 substantially opposite the front edge 22, a first surface edge 26 between the front edge 22 and the back edge 24, and a second surface edge 28 substantially opposite the first surface edge 26 and between the front edge 22 and the back edge 24.

With the disk 12 of the present invention, the disk 12 has means 30 on the cartridge 16 for inhibiting insertion of the disk 12 into a standard, low density disk drive as defined above. For purposes herein and recited in the claims, a standard disk drive is a disk drive having an ejection button positioned generally adjacent one side of the disk drive and a disk receiving slot along the front of the disk drive. The disk receiving slot of the standard disk drive has a finger relief portion positioned generally centrally along disk receiving slot on the front of the disk drive.

Preferably, the means 30 is a raised portion on both or either the first top surface 18 and/or the second bottom surface 20 of the cartridge 16 nearingly adjacent the front edge 22 and both or either the first surface edge 26 and/or the second surface edge 28. The raised portion 30 either on the first top surface 18 or the second bottom surface 20 or both together with the thickness of the cartridge 16 has a thickness greater than the slot of the standard disk drive. Therefore, since the standard disk drive has the finger relief portion of the slot positioned generally in the center of the disk drive as described above, the raised portion 30 of the disk 12, being positioned nearingly adjacent the first surface edge 26 or the second surface edge 28, inhibits insertion of the disk 12 of the present invention into the standard disk drive. Actual operation and insertion of the disk 12 with the disk drive 10 of the present invention will be discussed in further detail below.

As illustrated in FIGS. 1 and 2, typically, the disk drive 10 has a rotating mechanism 32 for rotating the disk 12 when the disk 12 is in a loaded position. Furthermore, the disk drive 10 has a transducer assembly 34 for reading information from the disk 12 and writing information to the disk 12 also when the disk 12 is in the loaded position.

The disk drive 10 of the present invention has a base 36, a front face 38, a back end 40 opposite the front face 38, a first side wall 42 between the front face 38 and the back end 40, and a second side wall 44 opposite the first side wall 42 between the front face 38 and the back end 40. The front face 38 includes a slot 46 for inserting and removing the disk 12 into and out of the disk drive 10 as will be discussed in further detail below. Furthermore, both the first side wall 42 and the second side wall 44 have a drive slot 48, 50 formed therein for receiving a guide pin as will also be discussed in further detail below.

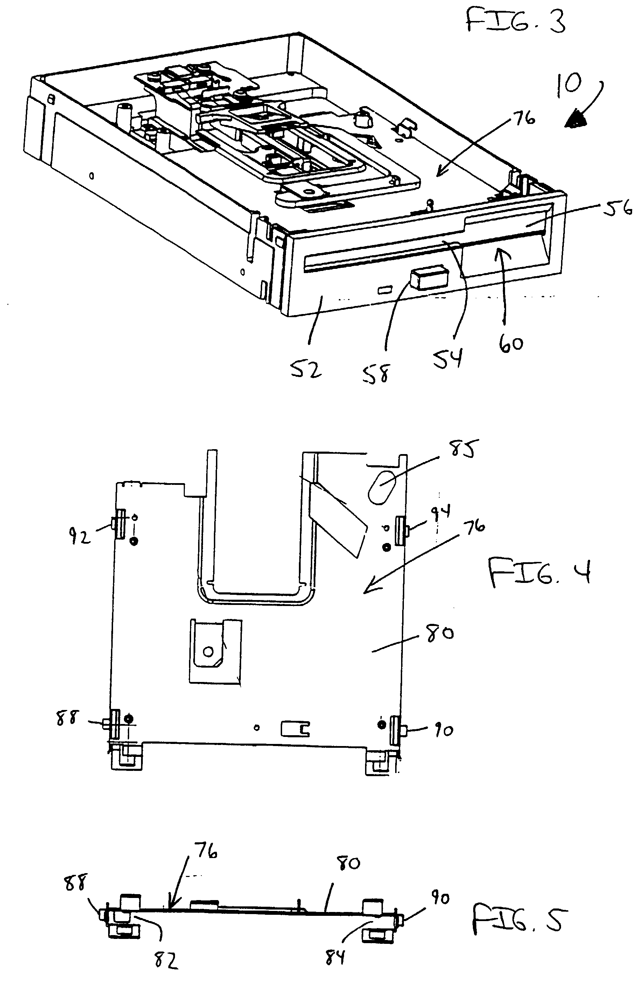

As illustrated in FIG. 3, the disk drive 10 of the present invention has a face plate 52 releasably mounted to the front face 38 of the disk drive 10. The face plate 52 has a corresponding face plate slot 54, a spring-biased door 56 substantially covering the face plate slot 54, and a button aperture 58. The face plate slot 54 is aligned with the slot 46 on the front face 38 of the disk drive 10 through which the disk 12 is intended to pass as it moves into and out of the disk drive 10. The face plate slot 54 has a finger relief portion 60 formed in the face plate 52 for assisting the user in inserting and removing the disk 12 into and out of the disk drive 10. The finger relief portion 60 preferably has a width greater than the width of the face plate slot 54. In the disk drive 10 of the present invention, the finger relief portion 60 is positioned off-center relative to the length of the face plate slot 54 of the face plate 52 of the disk drive 10 as will be discussed in further detail below.

As illustrated in FIG. 1, the disk drive 10 of the present invention includes a biasing mechanism 62 within the disk drive 10 for biasing the disk 12 in a direction generally away from the interior of the disk drive 10 and through the slot 46 of the front face 38 and the face plate slot 54 of the face plate 52. Typically, the biasing mechanism 62 is mounted nearingly adjacent either the first side wall 42 or the second side wall 44 of the disk drive 10. The biasing mechanism 62 has a pivotally mounted arm 64 having a stationary pivot end 66 and a movable free end 68 with a substantially perpendicular finger member 70 protruding from the arm 64 between the pivot end 66 and the free end 68 of the arm. A coil spring member 72 adjacent the free end 68 of the arm 64 biases the free end 68 of the arm 64 and the finger member 70 in a direction generally toward the slot 46 in the front face 38 of the disk drive 10. While a coil spring has been described herein as biasing the biasing mechanism 62, it is within the scope of the present invention to use other types of springs to achieve the same result. Actual operation of the biasing mechanism 62 together with the other components of the disk drive 10 of the present invention will be described in further detail below.

The disk drive 10 of the present invention also includes a retention mechanism 74 for overcoming the bias of the biasing mechanism 62 and releasably retaining the disk 12 within the disk drive 10. As illustrated in FIGS. 2 and 3, the retention mechanism 74 includes a holding assembly 76 and a slider assembly 78 cooperating with the holding assembly 76 during loading and unloading of the disk 12 to and from the disk drive 10.

As illustrated in FIGS. 4 and 5, the holding assembly 76 has a substantially planar top plate portion 80, a first guide channel 82 offset from and beneath the top plate portion 80, and a second guide channel 84 opposite the first guide channel 82 and offset from and beneath the top plate portion 80. The top plate portion 80 has an arm receiving aperture 85 formed therein and aligned with the finger 70 of the biasing mechanism 62 to receive the arm 62 upon insertion of the disk 12 into the disk drive 10. Furthermore, the top plate portion 80, the first guide channel 82, and the second guide channel 84 form a disk receiving compartment 86 sized and shaped for receiving and releasably holding the disk 12. Operation of the biasing mechanism 62 and the retention mechanism 74 will be described further below.

Both the first guide channel 82 and the second guide channel 84 of the holding assembly 76 have a first guide pin 88, 90 and a second guide pin 92, 94, respectively. Both the first guide pins 88, 90 and the second guide pins 92, 94 of the first and second guide channels 82, 84 extend in a direction generally away from the disk receiving compartment 86 and toward either the first side wall 42 or second side wall 44 of the disk drive 10. The first guide pin 88 on the first guide channel 82 is inserted into the drive slot 48 of the first side wall 42 of the disk drive 10 and the first guide pin 90 on the second guide channel 84 is inserted into the drive slot 50 of the second side wall 44 of the disk drive 10. The first guide pins 88, 90 of the first guide channel 82 and the second guide channel 84, respectively, maintain the horizontal position of the holding assembly 76 relative to the first side wall 42 and the second side wall 44 of the disk drive 10.

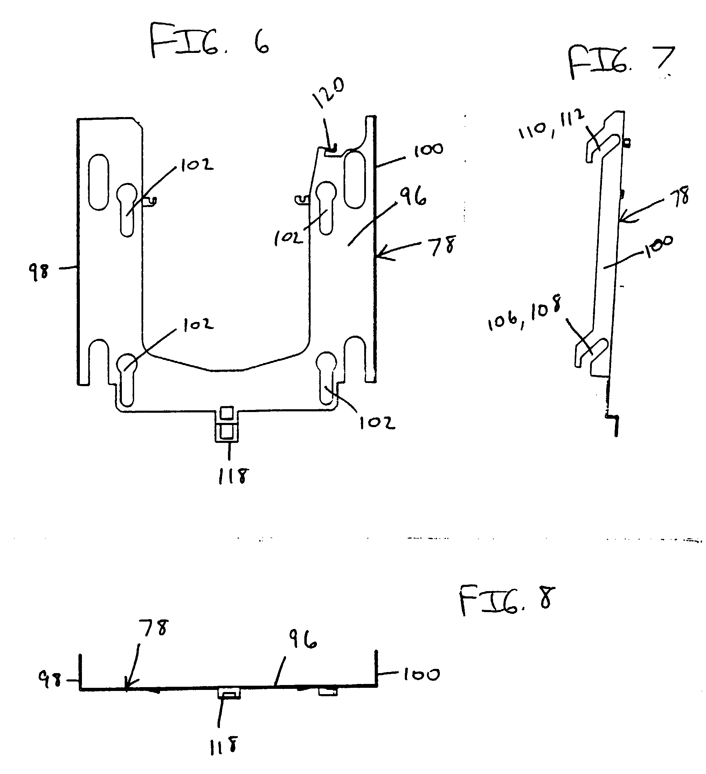

As illustrated in FIGS. 6, 7, and 8, the slider assembly 78 of the retention mechanism 74 has a substantially planar base plate portion 96, a first side portion 98 substantially perpendicular to the base plate portion 96, and a second side portion 100 opposite the first side portion 98 and substantially perpendicular to the base plate portion 96. The base plate portion 96 has a plurality of slotted apertures 102 for receiving guiding pins 104 mounted on the base 36 of the disk drive 10. The slotted apertures 102 are sized and shaped for allowing the guiding pins 104 to move freely within the slotted apertures 102 as the slider assembly 78 moves horizontally relative to the base 36 of the disk drive 10.

The first side portion 98 and the second side portion 100 of the slider assembly 78 each has an angled first guide slot 106, 108 and an angled second guide slot 110, 112 for receiving the first guide pins 88, 90 and the second guide pins 92, 94, respectively, of the first guide channel 82 and the second guide channel 84, respectively, of the holding assembly 76 of the retention mechanism 74. The first guide slots 106, 108 and the second guide slots 110, 112 are shaped and sized to allow the first guide pins 88, 90 and the second guide pins 92, 94, respectively, to freely move within the first guide slots 106, 108 and the second guide slots 110, 112, respectively, and allow the holding assembly 76 to move in a direction generally away from the front face 38 and the base 36 of the disk drive 10 when the disk 12 is in an unloaded position and in a direction generally toward the front face 38 and the base 36 of the disk drive 10 when the disk 12 is in a loaded position. Movement of the holding assembly 76 during loading and unloading of the disk 12 will be described in further detail below.

As illustrated in FIGS. 1 and 2, the slider assembly 78 further includes a first spring member 114 and a second spring member 116 biasing the slider assembly 78 in a direction generally toward the front face 38 of the disk drive 10. The slider assembly 78 also includes a button or ejection member 118 extending from the base plate portion 96 through the button aperture 58 of the face plate 52. The button member 58 is positioned inwardly away from the first side wall 42 and the second side wall 44 of the disk drive 10. In a preferred embodiment of the disk drive 10 of the present invention, the button member 118 is centrally located relative to the front face 38 of the disk drive 10.

Furthermore, as illustrated in FIG. 6, the slider assembly 78 of the disk drive 10 of the present invention has a catch member 120 nearingly adjacent the free end 68 of the arm 64 of the biasing mechanism 62. When the disk 12 is out of the disk drive 10, the free end 68 of the arm releasably catches the catch member 120 to overcome the bias of the first spring member 114 and the second spring member 116 to maintain the holding assembly 76 in the unloaded position.

In operation of the disk drive 10 of the present invention, the user inserts the disk 12 through the face plate slot 54 of the face plate 52 and rotating the door 56 of the face plate 52 away from the face plate slot 54. The disk 12 is received into the disk receiving compartment 86 of the holding mechanism 76 of the disk drive 10 until the disk 12 contacts the finger 70 of the biasing mechanism 62. It should be noted that the raised portion 30 of the disk 12 should be aligned with the finger relief portion 60 of the face plate 52 since the height of the raised portion 30 together with the thickness of the disk 12 is greater than the width of the face plate slot 54. The width of the finger relief portion 60 has a sufficient width to accommodate the increased height of the disk 12 including the raised portion 30 thereon thereby allowing insertion of the disk 12 into the disk drive 10 of the present invention.

As the user continues to insert the disk 12 into the disk receiving compartment 86 by inserting his or her finger into the finger relief portion 60 on the face plate 52, the bias of the spring member 72 is overcome and the arm 64 and finger member 70 of the biasing mechanism 62 is rotated in a direction generally away from the front face 38 of the disk drive 12 and toward the back end 40 of the disk drive 10. In the present invention, it is desirable to have the finger relief portion 60 of the face plate 52 on the same side of the disk drive 10, either nearingly adjacent the first side wall 42 or the second side wall 44 of the disk drive 10, the force on the disk 12 by the user is directly aligned with the finger member 70 of the biasing mechanism 62 thereby allowing the force to be translated straight to the biasing mechanism 62 and providing smooth, efficient loading of the disk 12 into the disk drive 10.

Upon the continued insertion of the disk 12 into the disk drive 10, the rotation of the arm 64 and the finger member 70 of the biasing mechanism causes the free end 68 of the arm 64 to be released from the catch member 120 of the slider assembly 78. The first spring member 114 and the second spring member 116 then cause the slider assembly 78 to move in a direction generally toward the front face 38 and the base 40 of the disk drive 10. In particular, the first guide pins 88, 90 and the second guide pins 92, 94 of the first guide channel 82 and the second guide channel 84 follow the first guide slots 106, 108 and the second guide slots 110, 112 on the slider assembly 78 thereby moving the holding assembly 76 in a direction generally toward the base 40 of the disk drive 10. Moving the holding assembly 76 in such a fashion causes the disk 12 to be in the loaded position and into operative contact with the rotating mechanism 32 for rotating the disk 12 and the transducer assembly 34 for reading information from and writing information to the disk 12 depending on the user's desires and needs.

When the user has completed reading information from and writing information to the disk 12 and desires to eject the disk 12 from the disk drive 10 of the present invention, the user simply depresses the generally centrally located button member 118 of the slider assembly 78 overcoming the bias of the first spring member 114 and the second spring member 116 of the slider assembly 78. Since the first spring member 114 and the second spring member 116 are equally spaced from the approximate center of the disk drive 10, depression of the generally centrally located button member 118 applies equal force to both the first spring member 114 and the second spring member 116 and moves the slider assembly 78 generally straight toward the back end 40 of the disk drive 10. By applying equal force to both the first spring member 114 and the second spring member 116, ejection of the disk 12 is achieved smoothly and efficiently with minimal wear and tear on the entire retention mechanism 74.

As the button member 118 is depressed, the slider assembly 78 is caused to move toward the back end 40 of the disk drive 10 with the first guide pins 88, 90 and the second guide pins 92, 94 of the first guide channel 82 and the second guide channel 84 causing the holding assembly 76 to move in a direction generally away from the base 36 of the disk drive 10. The holding assembly 76 continues moving in a direction generally away from the base 36 of the disk drive 10 until the free end 68 of the arm 64 catches the catch member 120 on the slider assembly 78. At this point, the biasing mechanism 62 biases the disk 12 in a direction generally toward the slot 46 of the front face 38 wherein an additional biasing member (not shown) assists to eject the disk 12, at least partially, through the face plate slot 54 of the face plate 52. The user can then grasp the disk 12 and completely remove the disk 12 from the disk drive 10 upon which the door 56 over the face plate slot closes.

The foregoing exemplary descriptions and the illustrative preferred embodiments of the present invention have been explained in the drawings and described in detail, with varying modifications and alternative embodiments being taught. While the invention has been so shown, described and illustrated, it should be understood by those skilled in the art that equivalent changes in form and detail may be made therein without departing from the true spirit and scope of the invention, and that the scope of the present invention is to be limited only to the claims except as precluded by the prior art. Moreover, the invention as disclosed herein, may be suitably practiced in the absence of the specific elements which are disclosed herein.

## Claims

1. In a disk drive for rotating a removable media-type disk, the disk drive having a disk receiving compartment, a front face including a slot through which the disk is intended to pass as it moves into and out of the compartment, a biasing mechanism for biasing the disk in a direction away from the compartment through the slot, and a retention mechanism for overcoming the bias of the biasing mechanism and releasably retaining the disk within the compartment of the disk drive, the improvement comprising:
an ejection arrangement including actuatable release means cooperating with the retention mechanism for releasing the retention mechanism so as to allow the biasing mechanism to eject the disk from the disk drive when the release means is actuated; and
actuating means located on the front face inwardly from both ends of the slot for actuating the release means.

2. The improvement of claim 1 wherein the actuating means includes an activatable button depressable in a direction generally toward the disk drive compartment.

3. The improvement of claim 1 wherein the slot has a finger relief portion, the width of the finger relief portion being greater than the width of the slot.

4. The improvement of claim 3 wherein the finger relief portion is off-centered on the front face of the disk drive.

5. A disk drive for rotating a removable media-type disk, the disk drive having a disk receiving compartment, a front face including a slot through which the disk is intended to pass as it moves into and out of the compartment, a biasing mechanism for biasing the disk in a direction away from the compartment through the slot, and a retention mechanism for overcoming the bias of the biasing mechanism and releasably retaining the disk within the compartment of the disk drive, the disk drive comprising:
an off-centered finger relief portion surrounding a portion of the slot, the width of the finger relief portion being greater than the width of the slot.

6. The disk drive of claim 5 and further comprising an ejection arrangement including actuatable release means cooperating with the retention mechanism for releasing the retention mechanism so as to allow the biasing mechanism to eject the disk from the disk drive when the release means is actuated and still further comprising actuating means located on the front face inwardly from both ends of the slot for actuating the release means.

7. In a removable media-type disk for rotational use in a floppy disk drive, the disk having a rotatable recording media and a cartridge surrounding the recording media, the cartridge having a first top surface and a second bottom surface, the improvement comprising:
means on the cartridge for inhibiting insertion of the disk into a standard, low density disk drive.

8. The improvement of claim 7 wherein the means includes a raised portion on either the first top surface or the second bottom surface of the cartridge.

9. The improvement of claim 7 wherein the means includes a first raised portion on the first top surface of the cartridge and a second raised portion on the second bottom surface of the cartridge.

10. The improvement of claim 7 wherein the first top surface and the second bottom surface of the cartridge each has a front edge, a back edge substantially opposite the front edge, a first surface edge between the front edge and the back edge, and a second surface edge substantially opposite the first surface edge and between the front edge and the back edge, and further wherein the means includes:
a raised portion on either the first top surface or the second bottom surface of the cartridge nearingly adjacent the front surface edge and either the first surface edge or the second surface edge.

11. The improvement of claim 7 wherein the first top surface and the second bottom surface of the cartridge each have a front edge, a back edge substantially opposite the front edge, a first surface edge between the front edge and the back edge, and a second surface edge substantially opposite the first surface edge and between the front edge and the back edge, and further wherein the means includes:
a raised portion on either the first top surface and the second bottom surface of the cartridge nearingly adjacent the front surface edge and either the first surface edge or the second surface edge.

12. A disk drive system having a floppy disk drive for rotating a removable media-type disk, the system comprising:
a) a high density disk drive having a front surface, a biasing mechanism for biasing the disk in a direction generally toward the front surface of the disk drive, and a retention mechanism for overcoming the bias of the biasing mechanism and releasably retaining the disk within the disk drive, the high density disk drive including:
i) a face plate releasably secured to the to the front surface of the high density disk drive, the face plate including:
1) a disk loading and unloading aperture sized and shaped for receiving the disk therethrough thereby allowing insertion and removal of the disk to and from the high density disk drive; and
2) an off-centered finger relief portion, the width of the finger relief portion being greater than the width of the loading and unloading aperture; and
ii) ejection means including an ejection button generally centrally positioned on the front surface of the high density disk drive, the ejection means cooperating with the retention mechanism for releasing the retention mechanism so as to allow the biasing mechanism to eject the disk from the high density disk drive; and
b) a disk having a rotatable recording media and a cartridge surrounding the recording media, the cartridge having a first top surface and a second bottom surface, the disk including:
i) means on the cartridge for inhibiting insertion of the disk into a standard, low density disk drive, the means being aligned with the finger relief portion of the face plate of the high density disk drive during insertion and ejection of the disk into and out of the high density disk drive.

13. The system of claim 12 wherein the face plate has an ejection aperture for receiving the ejection means therethrough.

14. The system of claim 12 wherein the means includes a raised portion on either the first top surface or the second bottom surface of the cartridge.

15. The system of claim 12 wherein the means includes a first raised portion on the first top surface of the cartridge and a second raised portion on the second bottom surface of the cartridge.

16. The system of claim 12 wherein the first top surface and the second bottom surface of the cartridge each have a front edge, a back edge substantially opposite the front edge, a first surface edge between the front edge and the back edge, and a second surface edge substantially opposite the first surface edge and between the front edge and the back edge, and further wherein the means includes:
a raised portion on either the first top surface or the second bottom surface of the cartridge nearingly adjacent the front surface edge and either the first surface edge or the second surface edge.

17. The system of claim 12 wherein the first top surface and the second bottom surface of the cartridge each have a front edge, a back edge substantially opposite the front edge, a first surface edge between the front edge and the back edge, and a second surface edge substantially opposite the first surface edge and between the front edge and the back edge, and further wherein the means includes:
a raised portion on either the first top surface and the second bottom surface of the cartridge nearingly adjacent the front surface edge and either the first surface edge or the second surface edge.
